# EUROPÄISCHE PATENTSCHRIFT

(11) **EP 0 402 704 B1**
(45) Veröffentlichungstag und Bekanntmachung des Hinweises auf die Patenterteilung: **20.04.1994**
(21) Anmeldenummer: 90110245.9
(22) Anmeldetag: 30.05.1990
(51) Int. Cl.: B01D 53/00, G05D 21/02

(54) **Verfahren zum Entfernen von Schwefelwasserstoff aus einem brennbaren Abgas**
Method of removing hydrogen sulphide from combustible exhaust gases
Méthode pour éliminer de l'hydrogène sulfuré des gaz d'échappement combustibles

(30) Priorität: 01.06.1989 DD 329131
(43) Veröffentlichungstag der Anmeldung: 19.12.1990
(73) Patentinhaber: Hölzemann Metallverarbeitung GmbH, D-57567 Daaden (DE)
(72) Erfinder: Neumann, Willi, Prof. Dr. sc. techn., D-06124 Halle (DE); Rückauf, Helmut, Dr. rer. nat., D-06124 Halle-Neustadt (DE); Volk, Norbert, Dr.-Ing., D-96175 Pettstadt (DE); Michael, Andreas, D-04275 Leipzig (DE); Forkmann, Ralf, Dipl.-Ing., D-86641 Rain am Lech (DE)
(74) Vertreter: Böhme, Volker, Dipl.-Ing.

(56) Entgegenhaltungen:
- EP-A- 0 142 872
- DE-A- 3 300 402
- DE-A- 3 542 345
- GB-A- 2 071 633
- US-A- 4 421 534
- WLB WASSER, LUFT UND BODEN, Band 33, Nr. 4, April 1989, Seiten 50-51, Mainz,DE; A. VINKE: "Biologische Entschwefelung von Klärgas"
- Perry's Chemical Engineers' Handbook, Sixth Edition, McGraw Hill 1984, Section 22, Seiten 22-1 bis 22-4, 22-75 bis 22-77, 22-99, 22-100, 22-126 und 22-127.

## Beschreibung

Die Erfindung betrifft ein Verfahren gemäß dem Oberbegriff des Patentanspruchs 1.

Ein Verfahren dieser Art ist durch die Zeitschrift "WLB Wasser, Luft und Boden", Band 33, Nr. 4, Seiten 50-51 bekannt. Bei diesem bekannten Verfahren wird auf eine Restsauerstoffkonzentration von 1,5-1,8 Vol.% im gereinigten Gas gesteuert. Es wird mittels der Meßeinrichung an dem zu reinigenden Abgas gemessen. In Abhängigkeit vom Gasstrom werden einzelne Dosierstrecken über Magnetventile gesteuert. Dem Abgas, das verarbeitet wird, ist ein mittlerer H₂S-Gehalt zugeordnet. Wenn aber der H₂S-Gehalt des zu reinigenden Abgases nicht ständig konstant ist, so wird in dem gereinigten Gas sehr häufig entweder ein unerwünscht hoher Gehalt an H₂S oder ein unerwünscht hoher Gehalt an Sauerstoff sein.

Die Menge und Zusammensetzung von zu reinigendem Abgas sind in der Praxis nicht konstant, da das Abgas in der Regel aus Abwasserbehandlungsanlagen, Güllebehandlungsanlagen sowie Mülldeponien gewonnen ist, wobei es auch Biogas oder Deponiegas genannt wird. Deshalb ist in der Praxis ein bekanntes (DE-A-35 42 345) Verfahren nicht brauchbar, bei dem ein in der Zusammensetzung konstantes Abgas in gleichbleibender Menge zugeführt wird und auch eine gleichbleibende Menge von Oxydationsmittel zugeführt wird. Wird eine gleichbleibende Menge an Oxydationsmittel zugeführt und nicht verbraucht, so kann im gereinigten Gas zuviel Sauerstoff vorhanden sein. Wenn in dem gereinigten Gas zuviel Sauerstoff vorhanden ist, besteht Explosionsgefahr.

Eine Aufgabe der Erfindung ist es daher, ein Verfahren gemäß Oberbegriff des Patentanspruchs 1 zu schaffen, bei dem in Anpassung an die Menge und Zusammensetzung des dem Reaktor zuströmenden, zu reinigenden Abgases der Gehalt des gereinigten Gases an Sauerstoff fortlaufend auf einem ausreichend niedrigen Wert gehalten wird. Das erfindungsgemäße Verfahren weist, diese Aufgabe lösend, die kennzeichnenden Merkmale des Patentanspruchs 1 auf.

Es wird der zu entfernende Schwefelwasserstoff zu elementarem Schwefel und/oder zu Sulfat oxydiert. Der im Abgas enthaltene Schwefelwasserstoff wird beim Durchströmen des biologischen Reaktors, dessen Mikroorganismenpopulation vorzugsweise der Gattung Thiobacillus, insbesondere Thiobacillus ferrooxidans, angehört, unter Sauerstofflimitierung, welche durch den geschlossenen Regelkreis erzeugt wird, zu elementarem Schwefel und/oder Sulfat umgewandelt. Es wird im unteren Teil des biologischen Reaktors, der in der Regel als Festbettreaktor gestaltet ist, das schwefelwasserstoffhaltige Abgas aufgegeben. Das Oxydationsmittel in Form eines sauerstoffhaltigen Gases, z.B. Luft oder reiner Sauerstoff, wird im Gleichstrom zum Abgas zugeführt. Das Abgas-Luft-Gemisch bzw. Abgas-Sauerstoff-Gemisch wird über eine Gasverteilungseinrichtung, zweckmäßigerweise einen Gasverteilungsring, durch das Filterbett geführt. Als Trägermaterial für die zu fixierende Mikroorganismenpopulation kann der Reaktor z.B. Torf, Torf-Reisig-Gemische, Heidekraut-Gemische oder Müllkompost. mit einer definierten Feuchtigkeit enthalten, das im unteren Teil des Reaktors gelagert ist. Auf diesem Trägermaterial bildet sich ein biologischer Rasen aus, in dem die Stoffwechselvorgänge der Mikroorganismen ablaufen.

Vorteilhaft ist es, wenn ein Großteil des Gas-Luft-Gemisches als Rücklauf dem Reaktor mittels eines Gebläses erneut zugeführt wird, während der andere Teil des gereinigten Gases der Gasverwertung zugeführt wird. Es wird von dem Gasteil, der der Verwertung zugeführt wird, die Restsauerstoffkonzentration gemessen und registriert. Ein über- oder Unterschreiten einer Sauerstoffkonzentration von 0,1-0,5 Vol.%, wird von einem mit der Sauerstoffmeßeinrichtung on-line gekoppelten Steuerrechner erfaßt. Dieser steuert nach einem speziellen Algorithmus das Gebläse für die Luftzufuhr, oder aber ein entsprechendes elektrisches Regelventil, bei reiner Sauerstoffzufuhr, innerhalb der Oxydationsmittelzufuhr, so daß sich die Sauerstoffkonzentration im Gasteil, das der Verwertung zugeführt wird, einstellt. Durch diese Regelung wird ein Zustandekommen eines explosiblen Gas-Luft-Gemisches vermieden.

Besonders zweckmäßig und vorteilhaft ist es, wenn mehr als die stöchiometrisch notwendige Sauerstoffmenge, vorzugsweise etwa die 1,5-3-fache Menge an Sauerstoff zugeführt wird. Der Regelalgorithmus muß infolge der großen Verzögerungszeiten zwischen Sauerstoffeintrag und Sauerstoffkonzentrationsmessung die geringe Dynamik des Biofiltersystems korrigieren. Erfindungsgemäß wird das Eingangssignal des Sauerstoffsensors als Sprungantwortfunktion approximiert und nach der Methode der Parameterermittlung bei unbekannten Zeitkonstanten (Kolloquiums-Schrift 1988, Technische Hochschule Ilmenau) die sich einstellende Sauerstoffkonzentration als Endwertapproximation geschätzt. Die daraus berechnete Regelabweichung wird zur Führung der Sauerstoffkonzentration im gereinigten Gas benutzt. Dies hat den Vorteil, daß jeweils nur die Sauerstoff-Luftmengen in den Reaktor aufgegeben werden, die für die mikrobielle Tätigkeit der Mikroorganismen nötig sind, so daß eine wesentliche Qualitätsverschlechterung des Abgases vermieden wird und zudem eine Explosionsgefährdung durch ein zündfähiges Abgas-Sauerstoff-Gemisch nicht gegeben ist. Der Einsatz eines Steuerrechners ist zweckmäßig, da in einem solchen zu regelnden System äußerst lange Regellaufzeiten herrschen, die durch einen speziell an das System angepaßten mathematischen Algorithmus hinreichend ausregelbar sind. In der Regel wird bei nicht ausreichendem Vorhandensein von Nährstoffen im Reaktor am Kopf des Reaktors Nährlösung mit Spurenelementen zugegeben.

Es läßt sich auchein inertes Trägermaterial in Form von organischen Stoffen wie Sinterglas oder Keramik verwenden. Das Filter-bzw. Trägermaterial ist z.B. von Gummi gebildet. Als Gummi sind z.B. Gummiabfälle, wie zerkleinerte Altreifen vorgesehen. Es wird auch der in diesem Trägermaterial enthaltene Schwefel herausgelöst und abgelagert und zwar als elementarer Schwefel und/oder Sulfat. Es sind auch organische Polymere als Trägermaterial einsetzbar.

In der Praxis wird zur Oxydation des Schwefelwasserstoffes im Reaktor eine für die Mikroorganismen optimale Temperatur zwischen 20° und 30°C, vorzugsweise zwischen 23° und 25°C vorgesehen. Diese Temperaturen stellen sich von selbst ein und können bei niedrigen Außentemperaturen durch Isolierung des Reaktors gehalten werden.

Besonders zweckmäßig und vorteilhaft ist es auch, wenn durch eine pH-Wert-Regulierung, z.B. durch Zufuhr von verdünnter Natronlauge, im pH-Wert-Bereich zwischen 1-4, vorzugsweise zwischen pH-Wert 1,7 und 3,2, ein optimaler Wert für die Mikroorganismen eingestellt wird. Dies ist insbesondere in Verbindung mit dem Mikroorganismus der Gattung Thiobacillus und der angestrebten vollständigen Aufarbeitung des Schwefelwasserstoffes von Bedeutung.

Besonders zweckmäßig und vorteilhaft ist es, wenn inertes Filtermaterial bzw. Trägermaterial vorgesehen und eine Auswaschung des Filtermaterials von elementarem Schwefel/Sulfat durchgeführt wird und wenn die Auswaschung zyklisch durchgeführt wird. Es wird also durch eine sich zyklisch ändernde Betriebsweise des Reaktors, z.B. Fluten des Reaktors, eine Auswaschung des inerten Filtermaterials von elementarem Schwefel/Sulfat und den überschüssigen Mikroorganismen, beispielsweise über den Kopf des Reaktors, durchgeführt, so daß eine zyklische Regenerierung des inerten Filtermaterials während des Betreibens des Reaktors erreicht wird.

Das vorliegende Verfahren läßt sich so durchführen, daß bei der Verwendung von inertem Filtermaterial durch eine Kreislaufführung der Nährstoffsuspension das mit den Mikroorganismen bewachsene Trägermaterial ständig von einer auf geeigneten pH-Wert eingestellten Suspension umströmt wird. Der hier bevorzugte Mikroorganismus entwickelt sich sehr rasch. Er wird außerhalb des Reaktors gezüchtet und in den Reaktor eingesetzt bzw. geimpft. Das Heranwachsen der nötigen Menge an Mikroorganismus geht schneller bzw. die Adaptionsphase wird verkürzt.

Es läßt sich ein Reaktor verwenden, dessen das Träger-bzw. Filtermaterial aufnehmender Raum sich im Querschnitt nach unten verjüngt und dessen Wandung in dem sich verjüngenden Bereich mit verteilten Zutrittsöffnungen für Gas versehen ist und wenn die den Raum begrenzende Wandung oberhalb des sich verjüngenden Bereiches mit schrägabwärts gerichteten Leitblechen versehen ist. Es sind also im biologischen Reaktor geeignete Einbauten vorgesehen, durch die Rand- und Kurzschlußströmungen durch die von den Einbauten verursachte richtungsändernde Führung vermieden werden.

Die Erfindung ist hier weitgehend als Verfahren beschrieben. Sie besteht aber auch in einer entsprechend der Beschreibung ausgebildeten Vorrichtung. Die Erfindung wird im folgenden anhand eines Ausführungsbeispieles näher erläutert. In der Zeichnung zeigt
- Fig. 1: schematisch eine Vorrichtung zur Durchführung eines Verfahrens zum Entfernen von Schwefelwasserstoff aus einem brennbaren Abgas,
- Fig. 2: einen Teil eines Reaktors für eine Vorrichtung gemäß Fig. 1 in einem vertikalen Schnitt und in einem größeren Maßstab als in Fig. 1 und
- Fig. 3: eine Draufsicht auf den Reaktor gemäß Fig. 1.

Das beispielhaft beschriebene Verfahren wird für die Reinigung eines Modell-Abgases, das separat hergestellt wird, verwendet. Das so hergestellte Abgas hatte vor der biologischen Reinigung folgende mittlere Gaszusammensetzung:

| Gasart | Konzentration in Vol.% |
|---|---|
| Methan | 65 |
| Kohlendioxid | 34 |
| Schwefelwasserstoff | 1,0 |
| Wasserdampf | gesättigt |

Der biologische Reaktor 8 wird mit Mikroorganismen der Gattung Thiobacillus in einer speziellen Nährlösung über eine Zuleitung 13 angeimpft. Im Reaktor 8 befindet sich als Trägermaterial 17 eine feuchte Torfschüttung mit einem durchschnittlichen Feuchtegehalt von 72 Gew.%, auf der Mikroorganismen fixiert sind. Die Torfschüttung ist auf einem Siebboden 15 gelagert. Im unteren Teil des Reaktors wird über eine Zuleitung 1 der zu reinigende Abgasstrom, über eine Zuleitung 2 die für die Oxydation notwendige Luftmenge und über eine Rückleitung 5 gereinigtes Gas als Biogas-Luft-Gemisch durch ein Rohr 4 und einen Gasverteilungsring 16 dem Trägermaterial 17 im Reaktor 8 zugeführt. Ein Teil des über einen Auslaß 6 austretenden Gases wird mittels eines Verdichters bzw. Gebläses 12 über die Rückleitung 5 im Kreislauf erneut dem Reaktor 8 zugegeben. In einer Ableitung 7 strömt schwefelwasserstoffreies gereinigtes Gas, dessen Sauerstoffkonzentration mittels einer kontinuierlich arbeitenden Sauerstoffmeßeinrichtung 9 gemessen und registriert wird.

Ein mit der kontinuierlich arbeitenden Sauerstoffmeßeinrichtung 9 on-line gekoppelter Mikrorechner 10 erfaßt die jeweiligen Momentansauerstoffkonzentrationen. Der verwendete Regelalgorithmus approximiert die Änderung der Sauerstoffkonzentration als Sprungantwortfunktion und schätzt durch die Extrapolation die zu erwartende Sauerstoffendkonzentration, nach der Methode der Parameterermittlung bei unbekannten Zeitkonstanten und ermittelt daraus die Regelanweichung. Zur Schätzung werden im definierten Zeitintervall sechs äquidistant abgetastete Meßwerte der Sauerstoffkonzentration verknüpft. Die gesetzte Regelabweichung dient der Steuerung des Sauerstoffeintrags. Der Mikrorechner 10 steuert einen in der Zuleitung 2 befindlichen Verdichter bzw. ein Gebläse 11 digital an, so daß die Sauerstoffkonzentration im schwefelwasserstoffreien Gasstrom der Ableitung 7 im vorgegebenen Bereich geführt wird. Es zeigt sich, daß der im Abgasstrom der Zuleitung 1 enthaltene Schwefelwasserstoff vollständig zu elementarem Schwefel und Sulfat oxydiert wird. Schwefelwasserstoff war im bioloisch gereinigten Gasstrom der Ableitung 7 nicht mehr nachweisbar, so daß das Gas praktisch völlig geruchlos war. Das gereinigte Gas der Ableitung 7 hatte nach der biologischen Reinigung folgende mittlere Gaszusammensetzung:

| Gasart | Konzentration in Vol.% |
|---|---|
| Methan | 59,8 |
| Kohlendioxid | 30,8 |
| Stickstoff | 9,1 |
| Schwefelwasserstoff | nicht nachweisbar |
| Sauerstoff | 0,5 |

Die biologische Reinigung wurde bei Normaltemperatur und Normaldruck durchgeführt. Eine zusätzliche Zufuhr von Nährstoffen oder Spurenelementen oder Feuchtigkeit mittels Wasser ist nicht notwendig, da ein Feuchtigkeitseintrag durch das wasserdampfgesättigte Abgas der Zuleitung 1 ausreicht.

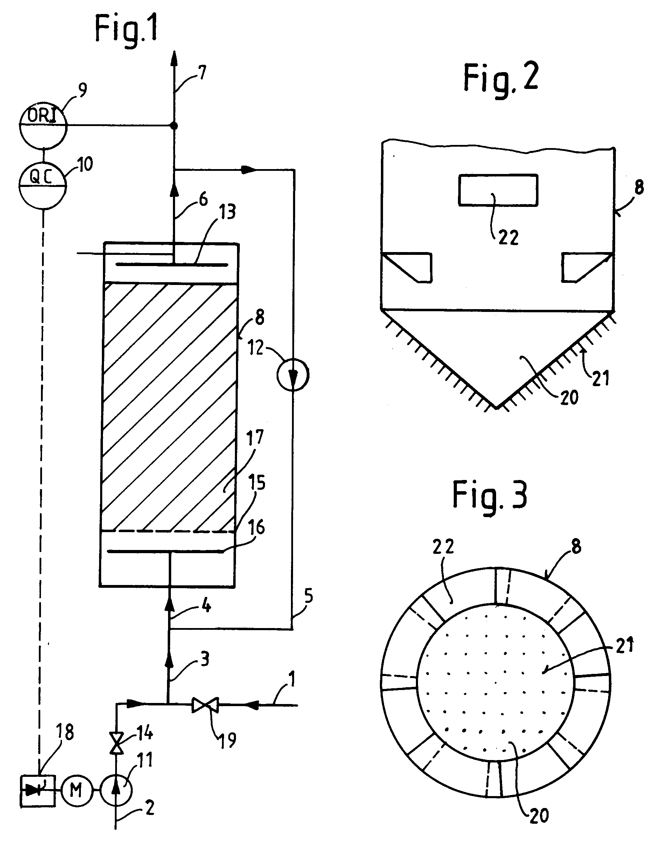

Die beiden Zuleitungen 1, 2 vereinigen sich zu einem Zwischenleitungsstück 3. In der einen Zuleitung 2 befindet sich außer dem Gebläse 11 bzw. Gasförderer ein Rückschlagventil 14. In der anderen Zuleitung 1 befindet sich ebenfalls ein Rückschlagventil 19. Der Mikrorechner 10 arbeitet auf eine Pumpensteuerung 18. Fig. 2 und 3 zeigen einen Reaktor, der einen sich nach unten im Querschnitt verjüngenden kegelförmigen Bereich 20 bildet, der mit Zutrittsöffnungen 21 für Gas versehen ist. Oberhalb des sich verjüngenden Bereiches 20 sind an der Wand des Reaktors 8 Leitbleche 22 vorgesehen, die jeweils zur Mitte hin schrägabwärts ragen, damit das Trägermaterial abwärts rutschen kann. Die Leitbleche 22 sind im Umfang gesehen auf Abstand voneinander angeordnet und auch in verschiedener Höhe angeordnet. Es überlappt jedes Leitblech 22 beiderends je ein höher oder tiefer angeordnetes anderes Leitblech.

## Patentansprüche

1. Verfahren zum Entfernen von Schwefelwasserstoff aus einem brennbaren, zu reinigenden Abgas (1) mittels eines biologischen Reaktors (8), in welchem Mikroorganismen immobilisiert sind,
bei dem der im zu reinigenden Abgas (1) enthaltene Schwefelwasserstoff unter Sauerstofflimitierung durch Mikroorganismen oxidiert wird,
bei dem ein sauerstoffhaltiger Oxidationsmittelstrom (2) im Gleichstrom zum zu reinigenden Abgas (1) derart zugeführt wird, daß ein gereinigtes Gas (7) mit einer kleinert Restsauerstoffkonzentration im gereinigten Gas anfällt,
bei der mittels einer kontinuierlich arbeitenden Meßeinrichtung (9) gemessen und registriert wird und ein mit der Meßeinrichtung (9) on-line gekoppelter Steuerrechner (10) eine dem Oxidationsmittelstrom (2) zugeordnete Stelleinrichtung (11) auf die Sauerstoffrestkonzentration im gereinigten Gas (7) ansteuert,
**dadurch gekennzeichnet,**
daß mittels der Meßeinrichtung (9) die Sauerstoffrestkonzentration im gereinigten Gas (7) gemessen wird, daß die Steuerrechner-Ansteuerung nach einem Regelalgorithmus erfolgt, in dem die Sauerstoffkonzentrationsänderung als Sprungantwortfunktion approximiert und somit die Dynamikkompensation des Biofiltersystems durch die Endwertapproximation nach der Methode der Parameterermittlung erreicht wird und,
daß auf eine Restsauerstoffkonzentration von 0,1 - 0,5 Vol.% im gereinigten Gas (7) gesteuert wird.

2. Verfahren nach Anspruch 1, **dadurch gekennzeichnet**, daß mehr als die stöchiometrisch notwendige Sauerstoffmenge, vorzugsweise etwa die 1,5 - 3-fache zugeführt wird.

3. Verfahren nach Anspruch 1 oder 2, **dadurch gekennzeichnet,** daß ein pH-Wert zwischen 1 - 4 für den Mikroorganismus eingeregelt wird.

4. Verfahren nach Anspruch 1, 2 oder 3, **dadurch gekennzeichnet,** daß inertes Filtermaterial (17) bzw. Trägermaterial vorgesehen und eine Auswaschung des Filtermaterials von elementarem Schwefel/Sulfat durchgeführt wird und daß die Auswaschung zyklisch durchgeführt wird.

## Claims

1. A process for removing hydrogen sulphide from a combustible waste gas (1) to be purified, by means of a biological factor (8) in which microorganisms are immobilized,
wherein the hydrogen sulphide contained in the waste gas (1) to be purified is oxidized with oxygen limitation by microorganisms,
wherein an oxygen-containing oxidizing-agent flow (2) is fed in parallel flow to the waste gas (1) to be purified, in such a way that a purified gas (7) with a small residual oxygen concentration is formed in the purified gas,
wherein measurements and recordings are made by means of a continuously operating measuring device (9), and a control computer (10) connected on-line to the measuring device (9) controls a setting device (11) associated with the oxidizing-agent flow (2) towards the residual oxygen concentration in the purified gas (7).
**characterized in that** the residual oxygen concentration in the purified gas (7) is measured by means of the measuring device (9),
the computer control is performed in accordance with a control algorithm in which the oxygen concentration change is approximated as a step-response function and so the dynamic compensation of the biological filter system is reached by the end value approximation in accordance with the method of determining parameters, and a control towards a residual oxygen concentration of from 0^{.}1 to 0^{.}5% by volume in the purified gas (7) is carried out.

2. A process according to Claim 1, **characterized in that** more than the quantity of oxygen required stoichiometrically, preferably approximately from 1^{.}5 to 3 times the quantity, is supplied.

3. A process according to Claim 1 or 2, **characterized in that** a pH value of between 1 and 4 is set for the microorganism.

4. A process according to Claim 1, 2 or 3, **characterized in that** inert filter material (17) or carrier material is provided and elemental sulphur/sulphate is washed out from the filter material, and the washing out is performed cyclically.

## Revendications

1. Procédé de séparation de sulfure d'hydrogène d'un effluent gazeux (1) combustible à purifier, au moyen d'un réacteur biologique (8) dans lequel sont immobilisés des micro-organismes,
dans lequel le sulfure d'hydrogène contenu dans l'effluent gazeux (1) à purifier est oxydé par des micro-organismes, avec limitation de l'oxygène,
dans lequel un courant d'oxydant (2) contenant de l'oxygène est acheminé parallèlement à l'effluent gazeux (1) à purifier de façon telle qu'est obtenu un gaz purifié (7) présentant une concentration résiduelle en oxygène faible qui est mesurée et enregistrée au moyen d'un dispositif de mesure (9) fonctionnant en continu et un processeur de commande (10) couplé en ligne au dispositif de mesure (9) excite un dispositif de réglage (11) affecté au courant d'oxydant (2) en fonction de la concentration résiduelle d'oxygène dans le gaz purifié (7),
caractérisé en ce que
la concentration résiduelle d'oxygène dans le gaz purifié (7) est mesurée au moyen du dispositif de mesure (9),
l'excitation par le processeur de commande s'effectue au moyen d'un algorithme de réglage dans lequel la modification de la concentration en oxygène est approchée par approximation sous forme de fonction de réponse à saut et la compensation dynamique du système de biofiltration est ainsi obtenue par approximation de la valeur finale selon la méthode de détermination de paramètres, et
on vise à obtenir une concentration résiduelle en oxygène de 0,1 à 0,5 % en volume dans le gaz purifié (7).

2. Procédé selon la revendication 1, caractérisé en ce qu'on apporte une quantité d'oxygène supérieure à la quantité stoechiométriquement nécessaire, de préférence d'environ 1,5 à 3 fois.

3. Procédé selon la revendication 1 ou 2, caractérisé en ce qu'on ajuste le pH entre 1 et 4 pour le micro-organisme.

4. Procédé selon la revendication 1, 2 ou 3, caractérisé en ce qu'il est prévu un matériau filtrant (17) ou matériau support inerte et qu'on procède à une séparation par lavage du soufre élémentaire/sulfate du matériau filtrant et en ce que ce lavage est effectué cycliquement.
